# EUROPÄISCHE PATENTSCHRIFT

(11) **EP 1 642 682 B1**
(45) Veröffentlichungstag und Bekanntmachung des Hinweises auf die Patenterteilung: **08.06.2011**
(21) Anmeldenummer: 05015829.4
(22) Anmeldetag: 21.07.2005
(51) Int. Cl.: B25B 23/147, B25B 21/00

(54) **Werkzeug mit Signalgeber**
Tool with signal generator
Outil avec générateur de signaux

(30) Priorität: 29.09.2004 DE 102004047232
(43) Veröffentlichungstag der Anmeldung: 05.04.2006
(73) Patentinhaber: Bosch Rexroth AG, 70184 Stuttgart (DE)
(72) Erfinder: Kugler, Achim, 74417 Gschwend (DE)

(56) Entgegenhaltungen:
- EP-A- 1 211 030
- EP-A- 1 454 713
- WO-A-03/101322
- DE-C1- 10 127 821
- US-A1- 2003 047 331

## Beschreibung

Die Erfindung entspringt der Gattung der Werkzeuge zur Herstellung lösbarer oder nicht lösbarer Verbindungen gemäß dem Obergebriff des Anspruches 1.

Bedienern von Werkzeugen werden in der Regel mittels optischer Anzeigen Informationen über den Momentanzustand des vom Werkzeug ausgeführten Anwendungsprozesses mitgeteilt. Es existieren beispielsweise Schrauber auf dem Markt, welche am Umfang ihres Gehäuses rote bzw. grüne Leuchtmittel aufweisen, um ein Schraubergebnis des Schraubvorganges zu signalisieren.

Der Bediener muss dabei permanent das Werkzeug im Auge behalten, um die übermittelte Information korrekt zu registrieren. Häufig sind die Bediener jedoch abgelenkt und erfassen die übermittelten Reize nicht korrekt, lassen sich durch den Abschaltruck des Gerätes irritieren und nehmen fälschlicherweise an, die Verschraubung sei korrekt angezogen. Dies kann zusätzlich auch noch durch Ablenkung verursacht sein oder durch Unachtsamkeit und führt dazu, dass nicht jede Schraubverbindung mit dem korrekten Drehmoment angezogen wird. Die gefährliche Folge: Nicht ausreichend gesicherte Verbindungen, z.B. bei Rädern von LKWs oder PKWs

**Aus der** EP 1 454 713 A2 **ist eine Vorrichtung zum Befestigen eines Befestigungsmittels bekannt. Diese Vorrichtung weist einen Vibrationsmechanismus auf, der an den Benutzer ein taktiles Signal ausgeben kann. Dabei wird der Rotor eines Motors dieser Vorrichtung in oszillierende Bewegung versetzt, um die Vibration zu erzeugen.**

Es ist daher die Aufgabe der Erfindung für ein Werkzeug gemäß der Eingangs genannten Art eine Methode zu finden, welche die Fehlerhäufigkeit bei der Bedienung des Werkzeuges bzw. Herstellung einer Verbindung mittels des Werkzeuges reduziert.

Erfindungsgemäß wird dies durch ein Werkzeug mit der Kombination der technischen Merkmale des unabhängigen Anspruchs 1 gelöst.

Bei dem Werkzeug kann es sich ganz allgemein um ein Werkzug zur Herstellung einer Verbindung handeln, welches von einem Bediener verwendet wird. Dem Bediener werden damit auch bei Ablenkung Informationen über den Arbeitsgang sicher übermittelt. Beispielsweise kann es sich bei dem Arbeitsgang um einen einfachen Schraubvorgang handeln, bei dem eine Schraube mit einem bestimmten Drehmoment anzuziehen ist. Wird die Rückmeldung erst dann aktiviert, wenn das geforderte Drehmoment erreicht ist, so wird der Bediener auch dann erst das Werkzeug von der Schraube lösen und zur nächsten Verbindung übergehen. Mittels der akustischen und/oder taktilen Informationsübertragung ist also sichergestellt, dass der Bediener bzw. Werker auch ohne Sichtkontakt zum Werkzeug die notwendigen Informationen rechtzeitig erhält. Auf Ablenkung oder Unachtsamkeit basierende Fehlerquellen werden damit drastisch reduziert. Besonders vorteilhaft ist die Möglichkeit nicht nur komplette Arbeitsgänge, sondern auch Teilschritte innerhalb eines Arbeitsganges zu kennzeichnen. So wäre es beispielsweise denkbar verschiedenen Drehmomenten unterschiedliche Signalmuster zuzuordnen. Sowohl die Kombination als auch die separate Verwendung von akustischen und/oder taktilen Signalgebern ist möglich. Bevorzugt sollten allerdings taktile Signalgeber verwendet werden, um den Geräuschpegel und die damit verbundenen Irritationen, beispielsweise in einer Montagehalle, möglichst gering zu halten. Außerdem kann der Bediener ein taktiles Signal unmittelbar seinem Werkzeug zuordnen. Selbstverständlich sind alle denkbaren Kombinationen von Signalgebern möglich, zum Beispiel ein optischer plus ein taktiler plus ein akustischer Signalgeber.

Bevorzugt liefert der Signalgeber ein pulsierendes Signal. Dies ist im Gegensatz zu einem permanenten gleichmäßigen Signal wirksamer und leichter zu lokalisieren.

Die charakteristischen Signalgrößen des vom Signalgeber erzeugten Signals sind änderbar. Insbesondere bezieht sich die Änderbarkeit auf die Frequenz, die Intensität, die Periodizität, das Signalspektrum (Überlagerungen) und die Phasenlage. Der Bediener kann damit die für ihn am einprägsamsten Signalmuster individuell zusammenstellen. Jedem Arbeitsgang bzw. jedem Teil eines Arbeitsganges ist damit eine eigene Signalcharakteristik zuordenbar.

Ganz besonders bevorzugt wird die Vibration mittels eines im Werkzeug angeordneten Vibrators realisiert. Diese Vibration überträgt sich auf das Werkzeuggehäuse und damit auf die Hände des Bedieners. Es kann nur an dem verwendeten Werkzeug vom Bediener gefühlt werden und stört andere Personen nicht.

Vorzugsweise erzeugt man die Vibration mittels einer mit einer Modulation der Antriebswelle, z.B. einer mittels einer mit Unwucht versehenen Motorwelle. Somit kann mit einer relativ preiswerten Maßnahme eine wirksame taktile Rückmeldung realisiert werden, da sich die Vibration auf das Werkzeuggehäuse überträgt.

Besonders empfohlen wird die Erfindung in Verbindung mit einem Handschrauber, da hier die Fehlerhäufigkeit durch falsches Anziehen von Schrauben relativ hoch ist.

Aber auch wenn das Werkzeug eine Vorrichtung zum Einbringen von Nieten ist, kann die Erfindung die Abarbeitung von Arbeitsschritten beschleunigen und die Fehlerquelle reduzieren.

Selbst wenn das Werkzeug ein Schweißgerät oder Teil eines Schweißgerätes ist, lässt sich die Erfindung sinnvoll einsetzen, indem beispielsweise der Schweißvorgang überwacht und das Ergebnis der Überwachung an den Bediener übermittelt wird. Die Überwachung könnte beispielsweise eine Kontrolle des Schweißpunktes mittels Ultraschalleinbringung beinhalten, wie dies häufig bei Widerstandsschweißanlagen verwendet wird.

Besonders vorteilhaft ist es, wenn das Werkzeug modular aufgebaut ist, wobei der Signalgeber als ein Modul ausgebildet ist. Damit wäre es möglich Werkzeuge mit Signalgebern unterschiedlicher Bauart und auch Leistung auszustatten und je nach Anforderung nachzurüsten. Beispielsweise könnte in einem Umfeld, in dem keine Anforderungen an den Lärmschutz bestehen, mittels eines akustischen Signalgebers gearbeitet werden, während in einer lärmempfindlichen Umgebung ein Modul mit taktiler und/oder optischer Signalgebung gewählt wird.

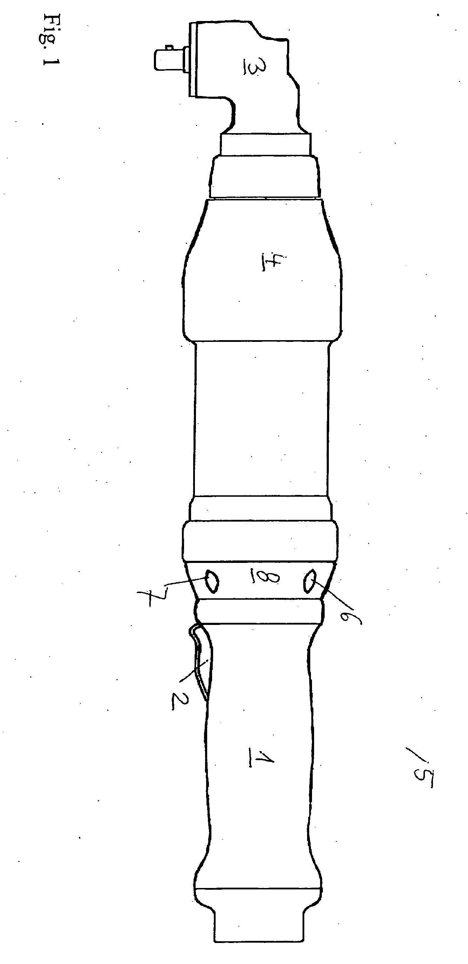

Figur 1 zeigt einen elektrischen Handschrauber 5 als beispielhafte Ausgestaltungsform der Erfindung. Der Handschrauber 5 verfügt über einen Handgriff 1, einen Betätigungshebel 2, einen Abtrieb 3 und ein Gehäuse 4, an dem der rechtwinkelige Abtrieb 3 angeordnet ist. Weiter sind zu sehen zwei Leuchtmittel 6, 7 an einem Mittelteil 8.

Es handelt sich um einen Handschrauber 5 mit einem Leuchtsignalgeber 6, 7, welcher dem Bediener eine optische Rückmeldung bezüglich des Fortschrittes des Arbeitsganges gibt und dessen Gehäuse 4 und/oder Handgriff 1 noch eine Vorrichtung zur Erzeugung einer akustischen und/oder taktilen Rückmeldung umfasst, womit ein kompletter Schraubvorgang oder Teile eines Schraubvorgangs signalisiert werden können. Das Aufleuchten des roten Leuchtmittels 6 kennzeichnet einen noch nicht abgeschlossenen Arbeitsgang Das Aufleuchten des grünen Leuchtmittels 7 einen bereits abgeschlossenen Arbeitsgang.
Der akustische und taktile Signalgeber im Gehäuse 4 erzeugt ein pulsierendes Signal, dessen charakteristischen Signalgrößen durch den Bediener einstellbar sind. Das taktile Signal, beispielsweise in Form einer Vibration, überträgt sich auf das Gehäuse 4 des Werkzeuges 5 und damit auch auf den Griff 1 und die Hand des Bedieners. Der Bediener kann vorgeben, welcher Arbeitsgang mit welchen Signalparametern signalisiert werden soll. Insbesondere ist die Frequenz, Intensität, Periodizität, Spektrum, Phasenlage und die Zeitdauer des Signals variabel und zuordenbar.

Der Handschrauber 5 könnte modular ausgebildet sein, d.h. der Griff 1, das Mittelteil 5, das Gehäuse 4 und der Winkelkopf 3 bilden separate Teile, welche zusammensteckbar sind. Somit könnte z.B. das Mittelteil 8 so ausgebildet sein, dass es unterschiedliche Arten oder Kombinationen von Signalgebern umfassen und je nach Anwendung, Umfeld und Anforderungen auf das Gehäuse 4 aufgesteckt wird. Auch wäre es denkbar das Mittelteil 8 mehrteilig so auszubilden, dass jedes Teil eine andere Art der Signalisierung umfasst (optisch, akustisch, taktil) und diese Teile beliebig steckbar am Gehäuse des Werkzeuges 5 anordenbar sind. Der Handschrauber 5 ist damit bezüglich seines Einsatzbereiches frei konfigurierbar.

### Bezugszeichenliste

- 1: Handgriff
- 2: Ein-/Ausschalter
- 3: Abtrieb
- 4: Gehäuse
- 5: Elektrischer Schrauber
- 6: Leuchtmittel rot
- 7: Leuchtmittel grün
- 8: Mittelteil

## Patentansprüche

1. Werkzeug mit einem Signalgeber zur Herstellung einer Verbindung, welcher dem Bediener eine Rückmeldung bezüglich des Fortschrittes des Arbeitsganges gibt, wobei die Rückmeldung taktiler Natur ist und den kompletten Arbeitsgang oder Teile des Arbeitsganges kennzeichnet und der Signalgeber am Werkzeug (5) angeordnet ist oder von diesem umfasst ist, wobei die charakteristischen Signalgrößen des vom Signalgeber erzeugten Signals veränderbar sind, **dadurch gekennzeichnet dass** die charakteristischen Signalgrößen des vom Signalgebers erzeugten Signals durch den Bediener einstellbar sind.

2. Werkzeug nach Anspruch 1, **dadurch gekennzeichnet, dass** der Signalgeber ein pulsierendes Signal erzeugt.

3. Werkzeug nach einem der vorhergehenden Ansprüche, **dadurch gekennzeichnet, dass** der taktile Signalgeber ein Vibrator ist.

4. Werkzeug nach Anspruch 4, **dadurch gekennzeichnet, dass** die Vibration mittels einer Modulation durch die Antriebsmotorwelle erzeugt wird.

5. Werkzeug nach einem der vorhergehenden Ansprüche, **dadurch gekennzeichnet, dass** es sich bei der Verbindung um eine Verschraubung und bei dem Werkzeug um einen Handschrauber (5) handelt

6. Werkzeug nach einem der Ansprüche 1 bis 5, **dadurch gekennzeichnet, dass** es sich bei der Verbindung um eine Vernietung handelt und das Werkzeug eine Vorrichtung zum Einbringen von Nieten ist.

7. Werkzeug nach einem der Ansprüche 1 bis 5, **dadurch gekennzeichnet, dass** es sich bei der Verbindung um eine Verschweißung handelt und das Werkzeug ein Schweißgerät oder ein Teil eines Schweißgerätes ist.

8. Werkzeug nach einem der vorhergehenden Ansprüche, **dadurch gekennzeichnet, dass** das Werkzeug modular aufgebaut ist, wobei der Signalgeber als ein aufsteckbares Modul ausgebildet ist.

## Claims

1. Tool with a signal generator for establishing a connection, which signal generator provides the operator with feedback regarding the progress of the operation, the feedback being of a tactile nature and characterizing the complete operation or parts of the operation, and the signal generator being arranged on the tool (5) or being included in the latter, the characteristic signal variables of the signal generated by the signal generator being able to be changed, **characterized in that** the characteristic signal variables of the signal generated by the signal generator can be set by the operator.

2. Tool according to Claim 1, **characterized in that** the signal generator generates a pulsating signal.

3. Tool according to one of the preceding claims, **characterized in that** the tactile signal generator is a vibrator.

4. Tool according to Claim 4, **characterized in that** the vibration is produced by the drive motor shaft by means of modulation.

5. Tool according to one of the preceding claims, **characterized in that** the connection is a screwed connection and the tool is a handheld screwdriver (5).

6. Tool according to one of Claims 1 to 5, **characterized in that** the connection is a riveted connection and the tool is an apparatus for inserting rivets.

7. Tool according to one of Claims 1 to 5, **characterized in that** the connection is a welded connection and the tool is a welding device or part of a welding device.

8. Tool according to one of the preceding claims, **characterized in that** the tool has a modular construction, the signal generator being in the form of a module which can be attached.

## Revendications

1. Outil comprenant un générateur de signal pour établir une liaison, qui donne à l'opérateur un retour d'information concernant la progression de la phase de travail, le retour d'information étant de nature tactile et identifiant la phase de travail complète ou des parties de la phase de travail et le générateur de signal étant disposé sur l'outil (5) ou étant entouré par celui-ci, les grandeurs caractéristiques du signal généré par le générateur de signal pouvant être modifiées, **caractérisé en ce que** les grandeurs caractéristiques du signal généré par le générateur de signal sont réglables par l'opérateur.

2. Outil selon la revendication 1, **caractérisé en ce que** le générateur de signal génère un signal impulsionnel.

3. Outil selon l'une des revendications précédentes, **caractérisé en ce que** le générateur de signal tactile est un vibreur.

4. Outil selon la revendication 4, **caractérisé en ce que** la vibration est générée au moyen d'une modulation par l'arbre du moteur d'entraînement.

5. Outil selon l'une des revendications précédentes, **caractérisé en ce que** la liaison est une opération de vissage et l'outil est une visseuse manuelle (5).

6. Outil selon l'une des revendications 1 à 5, **caractérisé en ce que** la liaison est une opération de rivetage et l'outil est un dispositif d'introduction de rivets.

7. Outil selon l'une des revendications 1 à 5, **caractérisé en ce que** la liaison est une opération de soudage et l'outil est un poste à souder ou une partie d'un poste à souder.

8. Outil selon l'une des revendications précédentes, **caractérisé en ce que** l'outil est de construction modulaire, le générateur de signal étant réalisé sous la forme d'un module enfichable.
